# EUROPÄISCHE PATENTSCHRIFT

(11) **EP 2 759 726 B1**
(45) Veröffentlichungstag und Bekanntmachung des Hinweises auf die Patenterteilung: **02.05.2018**
(21) Anmeldenummer: 13193613.0
(22) Anmeldetag: 20.11.2013
(51) Int. Cl.: F16C 32/04, B05D 3/04, B05D 1/00, B05D 1/02

(54) **Verfahren zum Beschichten und/oder Lackieren von Magnetringen eines Rotor-Magnetlagers, Rotor-Magnetlager sowie Vakuumpumpe**
Method for coating and/or varnishing of the magnet rings of a rotor magnet bearing, rotor magnet bearing and vacuum pump
Procédé de revêtement et/ou de laquage d'anneaux magnétiques d'un palier magnétique de rotor, palier magnétique de rotor et pompe à vide

(30) Priorität: 29.01.2013 DE 102013100853
(43) Veröffentlichungstag der Anmeldung: 30.07.2014
(73) Patentinhaber: Pfeiffer Vacuum GmbH, 35614 Aßlar (DE)
(72) Erfinder: Antonacci, Marco, 35585 Wetzlar-Blasbach (DE); Stammler, Herbert, 35396 Gießen (DE)
(74) Vertreter: Knefel, Cordula

(56) Entgegenhaltungen:
- EP-A2- 0 332 979
- EP-A2- 1 967 287
- DE-A1- 2 337 696
- DE-A1- 10 022 062
- DE-A1- 10 151 651
- JP-A- H07 194 073
- US-A- 5 106 273
- US-A- 5 154 978

## Beschreibung

Die Erfindung betrifft ein Verfahren zum Beschichten und/oder Lackieren von Magnetringen eines Rotor-Magnetlagers mit mehreren an oder in dem Rotor angeordneten Magnetringen sowie ein Rotor-Magnetlager und eine Vakuumpumpe.

Aus der Praxis ist es bekannt, Magnetringe eines Rotor-Magnetlagers sowie eines Stator-Magnetlagers vor korrosiven Prozessbestandteilen besonders zu schützen. Dies kann je nach Applikation notwendig sein, um beispielsweise eine hinreichende Korrosionsbeständigkeit zu erzielen. Eine einfache Möglichkeit besteht in der Beschichtung oder Lackierung der einzelnen Teile. Der Magnetlager-Stator kann durch Tauchen, Bestreichen oder andere Verfahren (zum Beispiel chemische Gasphasenabscheidung (CVD), physikalische Gasphasenabscheidung (PVD)) einfach beschichtet werden, da dieser nur eine begrenzte Größe beziehungsweise Ausdehnung und hauptsächlich Außenflächen aufweist.

Das Magnetlager des Rotors hingegen besitzt hauptsächlich Innenflächen, die nur schwer erreicht werden können, die jedoch trotzdem möglichst gleichmäßig belegt werden müssen, um keine zu große zusätzliche Unwucht in den Rotor einzubringen.

Aus dem Stand der Technik (DE 23 37 696 A1) ist eine magnetische Vorrichtung bekannt, die einen Stator und einen Rotor aufweist, welcher Dauermagnete abwechselnder Polarität aufweist und auf welchen durch Steuerung von Strömen in den im Magnetfeld des Rotors liegenden Statorwicklungen Kräfte in axialer, radialer und tangentialer Richtung ausgeübt werden. Die auf dem Rotor angeordneten Magnetringe weisen Oberflächen auf, die beschichtet ausgebildet sind. Die Beschichtung wird vor der Anordnung der Magnetringe auf dem Rotor angeordnet. Zwischen den Magnetringen angeordnete Kurzschlussringe weisen keine Beschichtung auf. Durch diese Ausführungsform ist ein umfassender Korrosionsschutz nicht gegeben.

Weiterhin gehört zum Stand der Technik (DE 101 51 651 A1) eine Nassläuferpumpe. Ein Motorläufer ist von einer Schutzschicht umgeben. Diese Schutzschicht wird durch Lackieren, Sprühen oder andere Beschichtungsverfahren auf den Motorläufer aufgebracht. Der Motorläufer wird vor der Montage auf einem Wellenansatz beschichtet. Hierdurch besteht die Gefahr der Beschädigung der Schutzschicht beim Aufschieben des Motorläufers auf der Welle.

Zum Stand der Technik (EP 1 967 287 A2) gehört ein Verfahren zum Testen einer Rotor- und Statoranordnung. Gemäß diesem Stand der Technik wird eine Barriereschicht auf einer Rotoranordnung angeordnet. Dieses Verfahren kann weiter verbessert werden.

Weiterhin gehört zum Stand der Technik (US 5,106,273) ein Verfahren zum Beschichten von Magnetringen eines Rotor-magnetlagers. Dieses zum Stand der Technik gehörende Verfahren kann dahingehend weiterentwickelt werden, dass die Beschichtung in einfacher Art und Weise und zuverlässig durchgängig aufgebracht wird.

Das der Erfindung zugrunde liegende technische Problem besteht darin, ein Verfahren anzugeben, mit dem ein Rotor-Magnetlager an den hauptsächlich innenliegenden Flächen möglichst gleichmäßig beschichtet oder lackiert werden kann. Darüber hinaus soll ein Rotor-Magnetlager angegeben werden, das eine gleichmäßige Beschichtung ohne Lufteinschlüsse aufweist.

Dieses technische Problem wird durch ein Verfahren mit den Merkmalen gemäß Anspruch 1 oder Anspruch 2 sowie durch ein Rotor-Magnetlager mit den Merkmalen gemäß Anspruch 11 gelöst.

Das erfindungsgemäße Verfahren zum Beschichten und/oder Lackieren von Magnetringen eines Magnetlagers, welches an einem Rotor angeordnet ist, bei dem die vorlackierten/-beschichteten oder unlackierten/-beschichteten Magnetringe des Magnetlagers an dem Rotor an dem für die Magnetringe vorgesehenen Ort angeordnet werden und bei dem freiliegende Flächen der Magnetringe anschließend beschichtet und/oder lackiert werden, derart, dass durch diese nachfolgende Lackierung/Beschichtung eine durchgängige und vakuumdichte Versiegelung des Rotor-Magnetlagers erfolgt, bei dem die wenigstens eine Beschichtungssubstanz und/oder der wenigstens eine Lack auf den innenliegenden Flächen der Magnetringe und/oder in Zwischenräumen zwischen den Magnetringen angeordnet werden/wird, zeichnet sich dadurch aus, dass die innenliegenden, freiliegenden Flächen der Magnete durch Einbringen wenigstens einer Beschichtungssubstanz und/oder wenigstens eines Lackes und Drehen des Rotors beschichtet werden.

Das erfindungsgemäße Verfahren zum Beschichten und/oder Lackieren von Magnetringen eines Magnetlagers, welches an einem Rotor angeordnet ist, bei dem die vorlackierten/-beschichteten oder unlackierten/-beschichteten Magnetringe des Magnetlagers an dem Rotor an dem für die Magnetringe vorgesehenen Ort angeordnet werden und bei dem freiliegende Flächen der Magnetringe anschließend beschichtet und/oder lackiert werden, derart, dass durch diese nachfolgende Lackierung/Beschichtung eine durchgängige und vakuumdichte Versiegelung des Rotor-Magnetlagers erfolgt, bei dem die wenigstens eine Beschichtungssubstanz und/oder der wenigstens eine Lack auf den innenliegenden Flächen der Magnetringe und/oder in Zwischenräumen zwischen den Magnetringen angeordnet werden/wird, zeichnet sich dadurch aus, dass die innenliegenden, freiliegenden Flächen durch Einbringen wenigstens einer Beschichtungssubstanz und/oder wenigstens eines Lackes und Ausschwenken des Rotors mit den Magnetringen beschichtet werden.

Vorteilhaft an der Erfindung ist, dass die Magnetringe des Magnetlagers in eine üblicherweise für die Magnetringe vorgesehene Ausnehmung des Rotors eingeschoben werden und dass
die Ringe erst anschließend beschichtet und/oder lackiert werden.

Das verwendete Magnetmaterial für Permanent-Magnetlager, zum Beispiel Samarium-Cobalt (SmCo) oder Neodym-Eisen-Bor (NdFeB), reagiert gegenüber mechanischen Lasten spröde und empfindlich auf Zuglasten. Aus der Praxis ist es bekannt, dass ein Magnetlager im Rotor, welches mit Permanentmagneten ausgerüstet ist, vorteilhaft so ausgeführt wird, dass die verwendeten Permanentmagnete so eingebaut werden, dass sie in allen Betriebszuständen unter Drucklasten stehen. Diese Vorspannung wird vorteilhaft durch eine Press- und/oder Schrumpfpassung der Magnete in ihrer Ausnehmung erreicht.

Aus der Praxis ist es bekannt, die Ringe einzeln zu beschichten und erst anschließend in der Ausnehmung des Rotors anzuordnen. Die Magnetringe werden unter einem sehr hohen Druck und bei erwärmtem Rotor in den Rotor eingeschoben, damit diese nach Abkühlen des Rotors einen festen Sitz aufweisen. Hierbei reibt sich der Lack der Einzelbeschichtung der Magnetringe ab und die Korrosionsbeständigkeit der Magnetringe ist nicht mehr gegeben.

Werden gemäß der Erfindung die Magnetringe in der hierfür vorgesehenen Ausnehmung des Rotors angeordnet, bevor diese beschichtet werden, und die Beschichtung anschließend in dem Rotor durchgeführt, können kein Lack und keine Beschichtungssubstanz durch die Montage abgerieben werden.

Darüber hinaus weist das erfindungsgemäße Verfahren den Vorteil auf, dass der Lack in möglicherweise zwischen den Magnetringen bestehende Zwischenräume eindringen kann und hierdurch die Korrosionsbeständigkeit durch die erfindungsgemäße Beschichtung erhöht wird.

Das Auffüllen der Zwischenräume mit Beschichtungsmaterial oder Lack bewirkt eine dichte Verbindung zwischen den Magnetringen. Dies ist vorteilhaft, wenn das Magnetlager an einem Rotor einer Vakuumpumpe angeordnet ist. In diesem Fall ist beim Betreiben der Vakuumpumpe kein Sperrgas notwendig. Ist kein Sperrgas im Bereich des Rotor-Magnetlagers erforderlich, entfallen hierdurch ansonsten notwendige Ventile und Kanäle und die dauerhafte Versorgung mit Sperrgas, beispielsweise bei einer Vakuumpumpe.

Das erfindungsgemäße Verfahren weist darüber hinaus den Vorteil auf, dass eine mechanische Nachbearbeitung nicht erforderlich ist. Darüber hinaus können die aus der Praxis bekannten Magnetringe verwendet werden, ohne diese modifizieren zu müssen.

Gemäß der Erfindung werden die innenliegenden, freiliegenden Flächen der Magnetringe durch Einbringen wenigstens einer Beschichtungssubstanz und/oder wenigstens eines Lackes in den von den Magnetringen begrenzten Raum und Drehen des Rotors beschichtet. Hierdurch ist ein weitgehend blasenfreies Auftragen der Beschichtungssubstanz und/oder des Lackes möglich. Darüber hinaus erhält man durch Drehen des Rotors einen sehr gleichmäßigen Auftrag, so dass eine Unwucht des Rotors weitgehend oder vollständig vermieden werden kann.

Die Magnetringe können schon vorlackiert/-beschichtet oder unlackiert/-beschichtet eingebracht werden. Auf jeden Fall erhält man durch die nachfolgende Lackierung/Beschichtung gemäß dem erfindungsgemäßen Verfahren eine durchgängige und sogar vakuumdichte Versiegelung des Rotor-Magnetlagers.

Es besteht auch die Möglichkeit, die innenliegenden, freiliegenden Flächen durch Einbringen wenigstens einer Beschichtungssubstanz und/oder wenigstens eines Lackes und durch Ausschwenken des Rotor-Magnetlagers mit den Magnetringen zu beschichten. Auch hierdurch wird eine durchgängige Beschichtung der Magnetringe des Rotor-Magnetlagers erzielt. Auch werden hierbei Zwischenräume zwischen den Magnetringen ausgegossen.

Besonders vorteilhaft wird nach dem Ausschwenken des Rotors mit den Magnetringen der überschüssige Lack entfernt, beispielsweise ausgegossen. Das Entfernen von überschüssigem Lack sollte unabhängig von der Art des Aufbringens der Beschichtungssubstanz und/oder des wenigstens einen Lackes durchgeführt werden.

Gemäß einer besonders bevorzugten Ausführungsform der Erfindung erfolgt die Beschichtung und/oder die Lackierung unter Vakuum.

Dieses Verfahren weist den besonderen Vorteil auf, dass vorhandene Fugen und Fasen zwischen den Magnetringen durch die Beschichtungssubstanz oder den Lack infiltriert werden und damit keine virtuellen Lecks und damit keine späteren Schwachstellen der Beschichtung entstehen können. Findet eine Beschichtung und/oder Lackierung nicht unter Vakuum statt, so können sich währenddessen oder nachträglich Blasen bilden. Wird der Rotor später beispielsweise in einer Vakuumpumpe betrieben, das heißt unter Vakuum, können sich die vorhandenen Gaseinschlüsse ausdehnen und unter Blasenbildung Öffnungen in die Beschichtung brechen. Die vorher eingeschlossenen Gase können sich in Richtung Hochvakuumseite bewegen und dort für Störungen im Prozess führen, weiterhin ermöglichen die entstandenen Schwachstellen der Beschichtung eine nicht erwünschte Korrosion des darunterliegenden Materials.

Gemäß einer weiteren vorteilhaften Ausführungsform der Erfindung wird die wenigstens eine Beschichtungssubstanz und/oder der wenigstens eine Lack mit einer Sprühvorrichtung aufgesprüht. Es können beispielsweise eine Sprühpistole oder ein Spritzautomat verwendet werden. Andere Sprühmöglichkeiten sind ebenfalls denkbar.

Es besteht die Möglichkeit, die Sprühvorrichtung einmal oder mehrfach innerhalb der Magnetringe hin- und/oder herzubewegen, um mehrere Schichten der Beschichtungssubstanz und/oder des Lackes aufzubringen.

Gemäß einer weiteren vorteilhaften Ausführungsform der Erfindung wird für die Beschichtung ein warm- oder UV-aushärtbarer Kunststoff und/oder ein warm- oder UV-aushärtbarer Lack verwendet.

Gemäß einer weiteren vorteilhaften Ausführungsform der Erfindung wird für die Beschichtung eine chemische Gasphasenabscheidung (CVD, chemical vapour deposition) oder eine physikalische Gasphasenabscheidung (PVD, physical vapour deposition) verwendet.

Gemäß einer weiteren vorteilhaften Ausführungsform der Erfindung wird für die Beschichtung eine chemische oder galvanische Metallabscheidung, zum Beispiel von Nickel, verwendet.

Andere Beschichtungssubstanzen und Lacke sind ebenfalls verwendbar.

Gemäß einer weiteren, besonders bevorzugten Ausführungsform der Erfindung wird der Rotor mit dem Rotor-Magnetlager in einer Rotationsvorrichtung angeordnet. Der Rotor wird in eine Drehbewegung versetzt, anschließend wird die wenigstens eine Beschichtungssubstanz und/oder der wenigstens eine Lack in den von den Rotor-Magnetringen begrenzten Raum eingebracht. Durch die Drehbewegung des Rotors wird eine besonders gleichmäßige Beschichtung der Lackierung erzielt. Darüber hinaus ist es möglich, eine sehr dünne Beschichtung oder Lackierung mit einer geringen Schichtdicke vorzusehen.

Eine weitere vorteilhafte Ausführungsform der Erfindung sieht vor, dass die Rotor-Magnetringe in einem Block vormontiert werden, dass der Block in eine Aufnahme im Rotor eingeschoben wird, dass anschließend der Rotor in Drehung versetzt wird und gleichzeitig oder anschließend die wenigstens eine Beschichtungssubstanz und/oder der wenigstens eine Lack in den von den Rotor-Magnetringen begrenzten Raum eingebracht wird. Dieses Verfahren gewährleistet eine gleichmäßige Beschichtung mit der Beschichtungssubstanz oder dem Lack.

Vorteilhaft wird überschüssiges Material unabhängig von der Art des Beschichtungsverfahrens nach dem Aufbringen der Beschichtungssubstanz und/oder des Lackes entfernt. Wird der Innenraum des Rotor-Magnetlagers beispielsweise mit dem Beschichtungsmaterial und/oder dem Lack vollständig ausgefüllt oder wird nur ein Teil des Raumes mit der Beschichtungssubstanz und/oder dem Lack gefüllt und der Raum mit den Magnetringen wird ausgeschwenkt, ist es erforderlich, anschließend das überschüssige Material auszukippen.

Gemäß der Erfindung wird vorteilhaft die wenigstens eine Beschichtungssubstanz und/oder der wenigstens eine Lack auf den innenliegenden Flächen der Magnetringe und/oder in den Zwischenräumen zwischen den Magnetringen angeordnet. Hierdurch erhält man eine vakuumdichte Lackierung oder Beschichtung.

Es ist möglich, eine oder mehrere Schichten aufzutragen. Es können auch mehrere Schichten mit unterschiedlichen Materialien aufgetragen werden.

Vorteilhaft wird der Rotor mit mehreren an oder in dem Rotor angeordneten Magnetringen, die mittels des erfindungsgemäßen Verfahrens beschichtet und/oder lackiert sind, derart hergestellt, dass die Magnetringe vor dem Beschichten in die für sie vorgesehene Ausnehmung des Rotors eingeschoben werden, ohne schon auf den Ringen vorhandenen Lack abzureiben. Es ist möglich, die Ringe einzeln zu montieren oder die Ringe in einem Block vorzumontieren und den gesamten Block in die für den Block vorgesehene Ausnehmung zu schieben. Die Ringe oder der Block können nur unter sehr hohem Druck in die Ausnehmung eingebracht werden. Hierzu wird der Rotor üblicherweise erwärmt, damit er sich ausdehnt und die Ringe oder der Block eingeschoben werden können. Kühlt sich der Rotor ab, sind die Ringe mit einem festen Sitz in oder an dem Rotor angeordnet. Anschließend werden die Ringe mit dem erfindungsgemäßen Verfahren beschichtet und/oder lackiert. Hierdurch ist ein gleichmäßiger und intakter Auftrag der Beschichtungssubstanz und/oder des Lackes möglich. Darüber hinaus kann der Lack in Zwischenräume und Fasen der Magnetringe eindringen und der Lack und/oder die Beschichtungssubstanz werden durch die Montage nicht mehr beschädigt.

Gemäß einer besonders bevorzugten Ausführungsform ist der Rotor mit dem erfindungsgemäßen Magnetlager in einer Vakuumpumpe angeordnet. Vakuumpumpen mit schnell drehendem Rotor dürfen zum einen möglichst keine Unwuchten aufweisen. Zum anderen ist es wichtig, das Rotor-Magnetlager dicht und ohne Einschlüsse auszubilden. Einschlüsse würden bei Anlegen eines Vakuums die Beschichtung oder den Lack beschädigen.

Dadurch, dass das Rotor-Magnetlager vakuumdicht ausgestaltet wird, kann auf Sperrgas und die dafür notwendigen Ventile und Kanäle und eine dauerhafte Versorgung mit Sperrgas verzichtet werden.

Eine besonders bevorzugte Ausführungsform der Erfindung sieht vor, dass der Rotor als Rotor einer Turbomolekularpumpe ausgebildet ist. Insbesondere bei diesem Pumpentyp mit schnell drehendem Rotor ist das Rotor-Magnetlager besonders vorteilhaft einsetzbar.

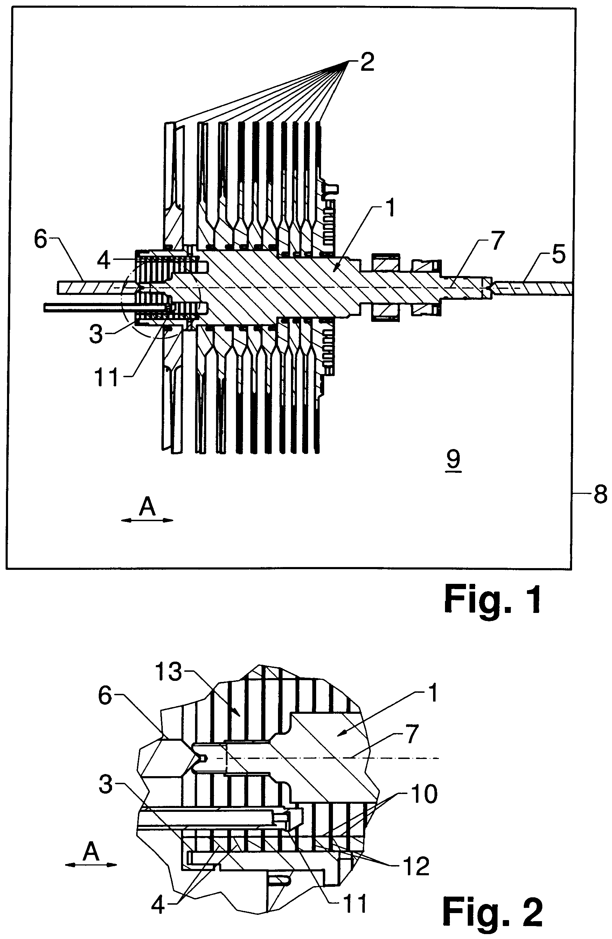

Weitere Merkmale und Vorteile der Erfindung ergeben sich anhand der zugehörigen Zeichnung, in der ein Ausführungsbeispiel eines erfindungsgemäßen Magnetlager-Rotors nur beispielhaft dargestellt ist. In der Zeichnung zeigen
- Fig. 1: einen Rotor mit Magnetlager während eines Beschichtungsvorganges, angeordnet in einer Vakuumkammer im Längsschnitt;
- Fig. 2: eine Einzelheit der Figur 1.

Die Figuren zeigen einen Rotor 1, der Rotorscheiben 2 trägt. In einer Ausnehmung 3 sind Magnetringe 4 eines Rotor-Magnetlagers angeordnet. Gemäß den Figuren ist eine Vielzahl von Magnetringen 4 angeordnet. Der Rotor 1 ist zwischen zwei Spitzen 5, 6 angeordnet, derart, dass sich der Rotor 1 um seine Längsachse 7 drehen kann. Der Rotor 1 ist in einer Vakuumkammer 8 angeordnet. Im Raum 9 der Vakuumkammer 8 herrscht ein Unterdruck.

Um die Magnetringe 4 an ihren innenliegenden, freiliegenden Flächen 10 zu beschichten, wird ein Sprühkopf 11 in die Nähe der Flächen 10 gebracht. Der Sprühkopf 11 wird in Richtung des Doppelpfeiles A einmal oder mehrfach hin- und herbewegt, während der Rotor 1 und damit die Magnetringe 4 sich um die Längsachse 7 drehen. Durch Aufsprühen eines Lackes oder einer Beschichtungssubstanz aus dem Sprühkopf 11 werden die Flächen 10 beschichtet und Zwischenräume 12 zwischen den Magnetringen 4 mit Lack und/oder Beschichtungssubstanz ausgefüllt.

Auf diese Art und Weise erhält man eine dünne, sehr gleichmäßige Beschichtung auf den Flächen 10. Durch Aufbringen der Beschichtung in der Vakuumkammer 8 unter Vakuum werden virtuelle Lecks und spätere Blasenbildungen zwischen den Magnetringen 4 ausgeschlossen.

Die Spitzen 5, 6 sind lediglich schematisch dargestellt. Selbstverständlich sind Halte- und Rotationsvorrichtungen für die Spitzen 5, 6 vorgesehen. Darüber hinaus ist die Vakuumkammer 8 lediglich schematisch angedeutet. Die Vakuumkammer 8 steht mit wenigstens einer Vakuumpumpe (nicht dargestellt) in Verbindung.

Nach dem Beschichten oder Lackieren der Magnetringe 4 wird der Rotor 1 aus der Vakuumkammer 8 entnommen. Die Spitzen 5, 6 werden entfernt, der Rotor 1 wird in einer Vakuumpumpe (nicht dargestellt) montiert. Dem Rotor-Magnetlager mit den Magnetringen 4 wird ein Magnetlager-Stator zugeordnet.

Anstelle des Einbringens der Sprühpistole 11 kann eine Beschichtungssubstanz in einen von den Magnetringen 4 begrenzten Innenraum 13 eingebracht werden. Der Raum 13 wird mit dem Beschichtungsmaterial ausgeschwenkt und dieses wird anschließend entfernt. In diesem Falle ist die Lagerung mit den Spitzen 5, 6 nicht erforderlich. Für ein Ausschwenken unter Vakuum ist es erforderlich, eine entsprechende Halte- und Schwenkvorrichtung (nicht dargestellt) in der Vakuumkammer 8 vorzusehen.

### Bezugszahlen

- 1: Rotor
- 2: Rotorscheiben
- 3: Ausnehmung
- 4: Magnetringe
- 5: Spitze
- 6: Spitze
- 7: Längsachse
- 8: Vakuumkammer
- 9: Raum
- 10: Flächen
- 11: Sprühkopf
- 12: Zwischenräume
- 13: von Magnetringen 4 begrenzter Raum

## Patentansprüche

1. Verfahren zum Beschichten und/oder Lackieren von Magnetringen (4) eines Rotor-Magnetlagers, welches an einem Rotor angeordnet ist, bei dem die vorlackierten/- beschichteten oder unlackierten/-beschichteten Magnetringe (4) des Magnetlagers an dem Rotor (1) an dem für die Magnetringe (4) vorgesehenen Ort (3) angeordnet werden, und bei dem freiliegende Flächen (10) der Magnetringe (4) anschließend beschichtet und/oder lackiert werden, derart, dass durch diese nachfolgende Lackierung/Beschichtung eine durchgängige und vakuumdichte Versiegelung des Rotor-Magnetlagers erfolgt, und bei dem die wenigstens eine Beschichtungssubstanz und/oder der wenigstens eine Lack auf den innenliegenden Flächen (10) der Magnetringe (4) und/ oder in Zwischenräumen (12) zwischen den Magnetringen (4) angeordnet werden/wird,
**dadurch gekennzeichnet , dass** die innenliegenden, freiliegenden Flächen (10) der Magnetringe (4) durch Einbringen wenigstens einer Beschichtungssubstanz und/oder wenigstens eines Lackes und Drehen des Rotors (1) beschichtet werden.

2. Verfahren zum Beschichten und/oder Lackieren von Magnetringen (4) eines Rotor-Magnetlagers, welches an einem Rotor angeordnet ist, bei dem die vorlackierten/- beschichteten oder unlackierten/-beschichteten Magnetringe (4) des Magnetlagers an dem Rotor (1) an dem für die Magnetringe (4) vorgesehenen Ort (3) angeordnet werden, und bei dem freiliegende Flächen (10) der Magnetringe (4) anschließend beschichtet und/oder lackiert werden, derart, dass durch diese nachfolgende Lackierung/Beschichtung eine durchgängige und vakuumdichte Versiegelung des Rotor-Magnetlagers erfolgt, und bei dem die wenigstens eine Beschichtungssubstanz und/oder der wenigstens eine Lack auf den innenliegenden Flächen (10) der Magnetringe (4) und/oder in Zwischenräumen (12) zwischen den Magnetringen (4) angeordnet werden/wird,
**dadurch gekennzeichnet, dass** die innenliegenden, freiliegenden Flächen (10) der Magnetringe (4) durch Einbringen wenigstens einer Beschichtungssubstanz und/oder wenigstens eines Lackes und Ausschwenken des Rotors (1) mit den Magnetringen (4) beschichtet werden.

3. Verfahren nach einem der Ansprüche 1 oder 2,
**dadurch gekennzeichnet, dass** die Beschichtung und/oder die Lackierung unter Vakuum erfolgt.

4. Verfahren nach Anspruch 1, **dadurch gekennzeichnet, dass** die wenigstens eine Beschichtungssubstanz und/oder der wenigstens eine Lack gesprüht werden/wird.

5. Verfahren nach Anspruch 4, **dadurch gekennzeichnet, dass** eine Sprühvorrichtung (11) verwendet wird.

6. Verfahren nach Anspruch 4 oder 5, **dadurch gekennzeichnet, dass** die Sprühvorrichtung (11) während des Sprühvorganges innerhalb der Rotor-Magnetringe (4) einmal oder mehrmals hin- und/oder herbewegt wird.

7. Verfahren nach einem der vorhergehenden Ansprüche, **dadurch gekennzeichnet, dass** die Rotor-Magnetringe (4) mit einem Kunststoff und/oder einem UV-aushärtbarem Lack beschichtet oder lackiert werden/wird.

8. Verfahren nach Anspruch 1, **dadurch gekennzeichnet, dass** der Rotor (1) in einer Rotationsvorrichtung (5, 6) angeordnet wird, dass der Rotor (1) in Drehbewegung versetzt wird, dass anschließend die wenigstens eine Beschichtungssubstanz und/oder der wenigstens eine Lack in den von den Rotor-Magnetringen (4) begrenzten Raum (13) eingebracht werden/wird.

9. Verfahren nach einem der vorhergehenden Ansprüche, **dadurch gekennzeichnet, dass** die Rotor-Magnetringe (4) in einem Block vormontiert werden, dass der Block in einer Ausnehmung (3) im Rotor (1) angeordnet wird, dass anschließend der Rotor (1) in Drehung versetzt wird und gleichzeitig oder anschließend die wenigstens eine Beschichtungssubstanz und/oder der wenigstens eine Lack in den von den Rotor-Magnetringen (4) begrenzten Raum (13) eingebracht werden/wird.

10. Verfahren nach einem der vorhergehenden Ansprüche, **dadurch gekennzeichnet, dass** überschüssiges Material aus dem von den Rotor-Magnetringen (4) begrenzten Raum entfernt wird.

11. Rotor mit mehreren an oder in dem Rotor angeordneten Magnetringen, die mittels eines Verfahrens gemäß den Merkmalen des Anspruches 1 oder 2 beschichtet und/oder lackiert sind, **dadurch gekennzeichnet, dass** die Magnetringe (4) vor dem Beschichten und/oder Lackieren in oder an dem Rotor-Magnetlager angeordnet werden.

12. Rotor nach Anspruch 11, **dadurch gekennzeichnet, dass** der Rotor (1) als Rotor (1) einer Vakuumpumpe ausgebildet ist.

13. Rotor nach Anspruch 12, **dadurch gekennzeichnet, dass** der Rotor (1) als Rotor (1) einer Turbomolekularpumpe ausgebildet ist.

14. Vakuumpumpe mit mindestens einem Rotor, der gemäß mindestens einem der Ansprüche 11 bis 13 ausgebildet ist.

## Claims

1. Method for coating and/or painting magnetic rings (4) of a rotor magnetic bearing which is arranged on a rotor, wherein the pre-painted/pre-coated or unpainted/uncoated magnetic rings (4) of the magnetic bearing are arranged on the rotor (1) at the location (3) provided for the magnetic rings (4), and wherein exposed surfaces (10) of the magnetic rings (4) are subsequently coated and/or painted so that, by means of this subsequent painting/coating, there results a continuous and vacuum-tight sealing of the rotor magnetic bearing, and wherein the at least one coating substance and/or the at least one paint are/is arranged on the inner surfaces (10) of the magnetic rings (4) and/or in spaces (12) between the magnetic rings (4),
**characterised in that** the internal exposed surfaces (10) of the magnetic rings (4) are coated by the introduction of at least one coating substance and/or at least one paint and by rotation of the rotor (1).

2. Method for coating and/or painting magnetic rings (4) of a rotor magnetic bearing which is arranged on a rotor, wherein the pre-painted/pre-coated or unpainted/uncoated magnetic rings (4) of the magnetic bearing are arranged on the rotor (1) at the location (3) provided for the magnetic rings (4), and wherein exposed surfaces (10) of the magnetic rings (4) are subsequently coated and/or painted so that by means of this subsequent painting/coating, there results a continuous and vacuum-tight sealing of the rotor magnetic bearing, and wherein the at least one coating substance and/or the at least one paint are/is arranged on the inner surfaces (10) of the magnetic rings (4) and/or in spaces (12) between the magnetic rings (4),
**characterised in that** the internal exposed surfaces (10) of the magnetic rings (4) are coated by the introduction of at least one coating substance and/or at least one paint and by rinsing of the rotor (1) with the magnetic rings (4).

3. Method according to one of the claims 1 or 2, **characterised in that** the coating and/or the painting takes place under vacuum.

4. Method according to claim 1, **characterised in that** the at least one coating substance and/or the least one paint are/is sprayed.

5. Method according to claim 4, **characterised in that** a spraying device (11) is used.

6. Method according to claim 4 or 5, **characterised in that** during the spraying process, the spraying device (11) is moved once or multiple times back and/or forth within the rotor magnetic rings (4).

7. Method according to one of the preceding claims, **characterised in that** the rotor magnetic rings (4) are/is coated or painted with a plastics material and/or a UV-curable paint.

8. Method according to claim 1, **characterised in that** the rotor (1) is arranged in a rotation device (5, 6), **in that** the rotor (1) is set into rotary movement, **in that** subsequently the at least one coating substance and/or the at least one paint are/is introduced into the space (13) delimited by the rotor magnetic rings (4).

9. Method according to one of the preceding claims, **characterised in that** the rotor magnetic rings (4) are pre-assembled in a block, **in that** the block is arranged in a recess (3) in the rotor (1), **in that** subsequently the rotor (1) is set into rotation and simultaneously or subsequently, the at least one coating substance and/or the at least one paint are/is introduced into the space (13) delimited by the rotor magnetic rings (4).

10. Method according to one of the preceding claims, **characterised in that** excess material is removed from the space delimited by the rotor magnetic rings (4).

11. Rotor with a plurality of magnetic rings arranged on or in the rotor, which are coated and/or painted by means of a method according to the features of claim 1 or 2, **characterised in that**, before the coating and/or painting, the magnetic rings (4) are arranged in or on the rotor magnetic bearing.

12. Rotor according to claim 11, **characterised in that** the rotor (1) is configured as a rotor (1) of a vacuum pump.

13. Rotor according to claim 12, **characterised in that** the rotor (1) is configured as a rotor (1) of a turbomolecular pump.

14. Vacuum pump with at least one rotor which is configured according to at least one of the claims 11 to 13.

## Revendications

1. Procédé de revêtement et/ou de laquage d'anneaux magnétiques (4) d'un palier magnétique de rotor, qui est disposé sur un rotor, dans lequel on dispose les anneaux magnétiques (4) du rotor magnétique pré-laqués/pré-revêtus ou non laqués/non revêtus sur le rotor (1) à l'endroit (3) prévu pour les anneaux magnétiques (4), et dans lequel on revêt et/ou on laque ensuite des faces libres (10) des anneaux magnétiques (4), de telle manière que par ce laquage/revêtement ultérieur on produise un scellage continu et étanche au vide du palier magnétique de rotor, et dans lequel on dispose ladite au moins une substance de revêtement et/ou ladite au moins une laque sur les faces internes (10) des anneaux magnétiques (4) et/ou dans des espaces intermédiaires (12) entre les anneaux magnétiques (4), **caractérisé en ce que** l'on revêt les faces libres internes (10) des anneaux magnétiques (4) en introduisant au moins une substance de revêtement et/ou au moins une laque et en faisant tourner le rotor (1).

2. Procédé de revêtement et/ou de laquage d'anneaux magnétiques (4) d'un palier magnétique de rotor, qui est disposé sur un rotor, dans lequel on dispose les anneaux magnétiques (4) du rotor magnétique pré-laqués/pré-revêtus ou non laqués/non revêtus sur le rotor (1) à l'endroit (3) prévu pour les anneaux magnétiques (4), et dans lequel on revêt et/ou on laque ensuite des faces libres (10) des anneaux magnétiques (4), de telle manière que par ce laquage/revêtement ultérieur on produise un scellage continu et étanche au vide du palier magnétique de rotor, et dans lequel on dispose ladite au moins une substance de revêtement et/ou ladite au moins une laque sur les faces internes (10) des anneaux magnétiques (4) et/ou dans des espaces intermédiaires (12) entre les anneaux magnétiques (4), **caractérisé en ce que** l'on revêt les faces libres internes (10) des anneaux magnétiques (4) en introduisant au moins une substance de revêtement et/ou au moins une laque et en faisant pivoter le rotor (1) avec les anneaux magnétiques (4).

3. Procédé selon une des revendications 1 ou 2, **caractérisé en ce que** l'on effectue le revêtement et/ou le laquage sous vide.

4. Procédé selon la revendication 1, **caractérisé en ce que** l'on pulvérise ladite au moins une substance de revêtement et/ou ladite au moins une laque.

5. Procédé selon la revendication 4, **caractérisé en ce que** l'on utilise un dispositif de pulvérisation (11) .

6. Procédé selon la revendication 4 ou 5, **caractérisé en ce que** l'on déplace le dispositif de pulvérisation (11) en va-et-vient une fois ou plusieurs fois à l'intérieur des anneaux magnétiques de palier (4) pendant l'opération de pulvérisation.

7. Procédé selon l'une quelconque des revendications précédentes, **caractérisé en ce que** l'on revêt et/ou on laque les anneaux magnétiques de rotor (4) avec une matière plastique et/ou une laque durcissant aux UV.

8. Procédé selon la revendication 1, **caractérisé en ce que** l'on dispose le rotor (1) dans un dispositif de rotation (5, 6), **en ce que** l'on déplace le rotor (1) selon le mouvement de rotation, et **en ce que** l'on introduit ensuite ladite au moins une substance de revêtement et/ou ladite au moins une laque dans l'espace (13) délimité par les anneaux magnétiques de rotor (4).

9. Procédé selon l'une quelconque des revendications précédentes, **caractérisé en ce que** l'on réalise un pré-montage des anneaux magnétiques de rotor (4) en un bloc, **en ce que** l'on dispose le bloc dans un évidement (3) dans le rotor (1), **en ce que** l'on met ensuite le rotor (1) en rotation et on introduit en même temps ou ensuite ladite au moins une substance de revêtement et/ou ladite au moins une laque dans l'espace (13) délimité par les anneaux magnétiques de rotor (4).

10. Procédé selon l'une quelconque des revendications précédentes, **caractérisé en ce que** l'on enlève la matière excédentaire hors de l'espace délimité par les anneaux magnétiques de rotor (4).

11. Rotor doté de plusieurs anneaux magnétiques disposés sur ou dans le rotor, qui sont revêtus et/ou laqués au moyen d'un procédé selon les caractéristiques de la revendication 1 ou 2, **caractérisé en ce que** l'on dispose les anneaux magnétiques (4) avant le revêtement et/ou le laquage dans ou sur le palier magnétique de rotor.

12. Rotor selon la revendication 11, **caractérisé en ce que** le rotor (1) constitue le rotor (1) d'une pompe à vide.

13. Rotor selon la revendication 12, **caractérisé en ce que** le rotor (1) constitue le rotor (1) d'une pompe turbomoléculaire.

14. Pompe à vide dotée d'au moins un rotor, qui est réalisé selon au moins une des revendications 11 à 13.
